Europäisches Patentamt

(19) European Patent Office

Office européen des brevets

(11) Publication number: 0 185 460
A2

# EUROPEAN PATENT APPLICATION

(21) Application number: 85308281.6

(22) Date of filing: 14.11.85

(51) Int. Cl.⁴: **B 29 C 61/00**
B 29 C 61/06
//B29K105:08

(30) Priority: 15.11.84 US 672445

(43) Date of publication of application:
25.06.86 Bulletin 86/26

(84) Designated Contracting States:
AT BE CH DE FR GB IT LI NL SE

(71) Applicant: RAYCHEM CORPORATION
300 Constitution Drive
Menlo Park California 94025(US)

(72) Inventor: Germeraad, Paul B.
200 San Mateo
Menlo Park California 94025(US)

(72) Inventor: Stiggelbout, John
187 Bryant Street
Palo Alto California 94301(US)

(74) Representative: Benson, John Everett et al,
Raychem Limited Intellectual Property Law Department
Swan House 37-39, High Holborn
London WC1(GB)

(54) Reformable composites and methods of making same.

(57) A reformable reinforced composite made by the melt-impregnation of fiber-reinforcing material preferably in the form of a tow with a cross-linkable thermoplastic polymer, the interlacing (e.g. braiding, weaving, knitting, etc.) of the impregnated material (tow) to form an intermediate composite, the melt-consolidation of the intermediate composite into a composite and the subsequent cross-linking of the impregnating polymer. Also disclosed is a reformable composite made by the subsequent polymer melt-impregnation of the already interlaced fiber-reinforcing material, followed by the melt consolidation and the subsequent cross-linking of the impregnating polymer. The result is a semi-finished, fiber-reinforced thermoplastic composite that may be reformed to a significant degree with only the use of heat and light pressure, and not requiring the use of dies, molds or high pressures.

FIG_1

REFORMABLE COMPOSITES AND METHODS OF MAKING SAME

The invention relates to structural, i.e., load-supporting, reinforced thermoplastic composites wherein the composites are freely reformable.

Background of the Invention

Fiber-reinforced thermoset and thermoplastic articles are widely used as parts of various mechanical equipment. Examples of these parts are aircraft parts, sports equipment components and in various other applications where excellent mechanical properties, heat-resistance, and light weight are desirable.

In the past, such parts have been made using a thermosetting polymer matrix, each part having been laid up, bagged, and cured in an autoclave. One difficulty with such thermosetting laminates, however, is that once the laminate has been formed into a shape, it cannot be remolded or reprocessed should a change in form be desired or if defects are present. Consequently, when a thermosetting composite is fabricated, the entire part must be scrapped or subjected to expensive repair procedures if it is defective.

Another difficulty with thermosetting polymer matrices is that in order to form a laminate, the reinforcing fiber must be impregnated with the thermosetting polymer, laminated, and then cured with heat and pressure. Since the curing cycle is a chemical reaction that must proceed at the proper rate in order to obtain a satisfactory product, the temperature and heating time must be carefully controlled. The operation is frequently lengthy and energy-intensive.

An alternative operation is that of pre-impregnating the reinforcing fiber with thermosetting polymers, in the form of rovings or tows, unidirectional tape, or woven fabrics. This approach simplifies the lay-up operations and improves laminate quality. Unfortunately, the pre-impregnated reinforcing fiber must generally be stored under refrigeration. Another limiting factor is that this material has a finite shelf-life, usually six to twelve months.

In contrast to the thermosetting plastics which have the above-mentioned deficiencies, there is considerable interest in fiber-reinforced thermoplastics or thermoplastic composites that may be reshaped in a heated mold under pressure. These fiber-reinforced composites may be divided into two general categories: short-fiber-reinforced materials, and long- or continuous-fiber-reinforced materials.

Typical means for obtaining short-fiber-reinforced thermoplastic articles with good productivity comprises incorporating chopped strands of fibers into a thermoplastic polymer and molding the fiber-incorporated thermoplastic polymer into an article of a desired shape by ordinary extrusion molding or injection molding. During this procedure, the fibers undergo shearing forces in the molding step by which they are undesirably cut, whereby the length of the fibers contained in the molded article is further shortened. Although the reinforcing fibers are randomly oriented, and short in length, they significantly improve the mechanical properties of the article. However, in comparison to long, oriented-fiber reinforcement, the molded article has poor mechanical properties. Subsequent remolding invariably requires precise and complicated tooling such as pressure dies, molds, and presses.

Improved mechanical properties may be obtained by using longer fibers as reinforcing agents. This material, typically referred to as Sheet Molding Compound (SMC), usually has a higher fiber content, and the matrix material may be either a thermoset or a thermoplastic. Articles are fabricated from this SMC sheet using heat and pressure, for example compression molding or hot stamping. Fiber orientation in the SMC is random, and dispersion is fairly uniform, resulting in over-reinforcing in low-stress regions and under-reinforcing in highly stressed regions. These materials are generally satisfactory for high-volume production where production tooling costs are insignificant, and the mechanical requirements are not too extreme.

Further improved mechanical properties are obtained from continuous- or long-fiber-reinforcing agents. Applications requiring these materials are generally confined to high-performance applications such as are typically found in the aerospace industry. In such applications, the precise fiber placement and orientation is critical as well as minimizing the percent of polymer in the matrix. A typical thermoplastic composite is prepared as follows: fibers are usually pre-impregnated with the thermoplastic matrix material desired; the fibers are then oriented as required (they may be unidirectional tapes, fabrics, or mats), and then laid up to the thickness required; the lay-up is then placed in a heated mold or die where the part is consolidated (melted and made cohesive) under heat and pressure. The process yields high-quality, void-free parts. U. S. Patent No. 3,939,024 to Hoggatt discloses such a method of fabricating such a laminate.

The above-mentioned short-fiber SMC and long-fiber-reinforced thermoplastic composites require both heat and pressure for molding, i.e. forming. If heat alone is applied, the polymer loses all integrity above its melt temperature and will flow freely if unconstrained. In a mold, this flow is desirable; however, without a mold, it allows delamination of the composite, and "sagging" or "wilting" of the part. Even in the case where the part is restrained on one side, forming causes deterioration in the integrity of the structure. The instant invention is a composite that maintains its integrity under heat with only light pressure, i.e. without a mold, and therefore may be reshaped. A composite with this characteristic is hereby defined as being "reformable." Known laminates require the high pressure of molds during shape changes to maintain their integrity and are therefore not "reformable" as defined above.

The instant invention produces a structural semi-finished long-fiber-reinforced cross-linked thermoplastic product that may be "reformed" to a significant degree with only the use of heat and light pressure but not requiring the use of dies, molds, or high pressures. This reformability is due in part to the fact that the composite of the instant invention is cross-linked after the composite is consolidated but before it is reformed.

Fibers have previously been coated with polymeric resin, including a thermoplastic resin, and have been cross-linked. U.S. Patent No. 3,937,859 discloses the protective coating of a thermoplastic composition onto a fabric wherein, at elevated temperatures, the thermoplastic will cross-link to produce a fusible interlining. The result, however, is a coated fabric which is inherently not the structural composite of the instant invention which is useful in high-performance applications.

U.S. Patent No. 4,313,999 to Hughes discloses a non-reformable laminate composition comprising a fabric material impregnated with a thermoplastic that is cross-linked. Hughes requires a solvent-based polymer system. In contrast, the composite of the subject invention utilizes a melt-processed polymer overcoming solvent-based system deficiencies. These deficiencies include the fact that solvents inherently require complicated processing steps including their removal during recovery and the need for multiple impregnation steps to accumulate polymer buildup. In addition, few soluable thermoplastic polymers suitable for use in creating structural composites exist. In contrast the melt-processible polymers of the instant invention are directly applied to the fiber-reinforcing material in one step in the desired proportion. In addition, many melt-impregnable thermoplastic polymers are specifically set forth as being within the scope of the instant invention.

## Summary of the Invention

The purpose of the instant invention is to provide a "reformable" reinforced composite cross-section useful in structural high-performance applications. To accomplish this purpose, a reformable composite is produced having fiber-reinforcing material melt-impregnated with a cross-linked thermoplastic polymer. The reformable composite is produced by melt-impregnating fiber reinforcing material with a cross-linkable thermoplastic polymer material to create an intermediate composite, forming under heat and pressure a composite, permitting the thermoplastic material to harden and thereafter cross-linking the polymer by means of further heating, ionizing radiation, or chemical reaction, thereby precluding the polymer from returning to the melt. The composite is thereafter reformable by temperature and by pressure alone. It is specifically within the scope of the invention to either first melt-impregnate fiber tows and then interlace the tows such as by braiding, weaving, knitting, etc., into an intermediate composite in the form of a web, or to interlace fiber tows into a web and then melt-impregnate the web.

## Description of the Drawing

Figure 1 illustrates in partial perspective the reformable composite of the instant invention, fabricated into a covered and lined duct.

Figure 2 is a process flow diagram of methods of making the reformable composite of the instant invention.

## Description of the Preferred Embodiment

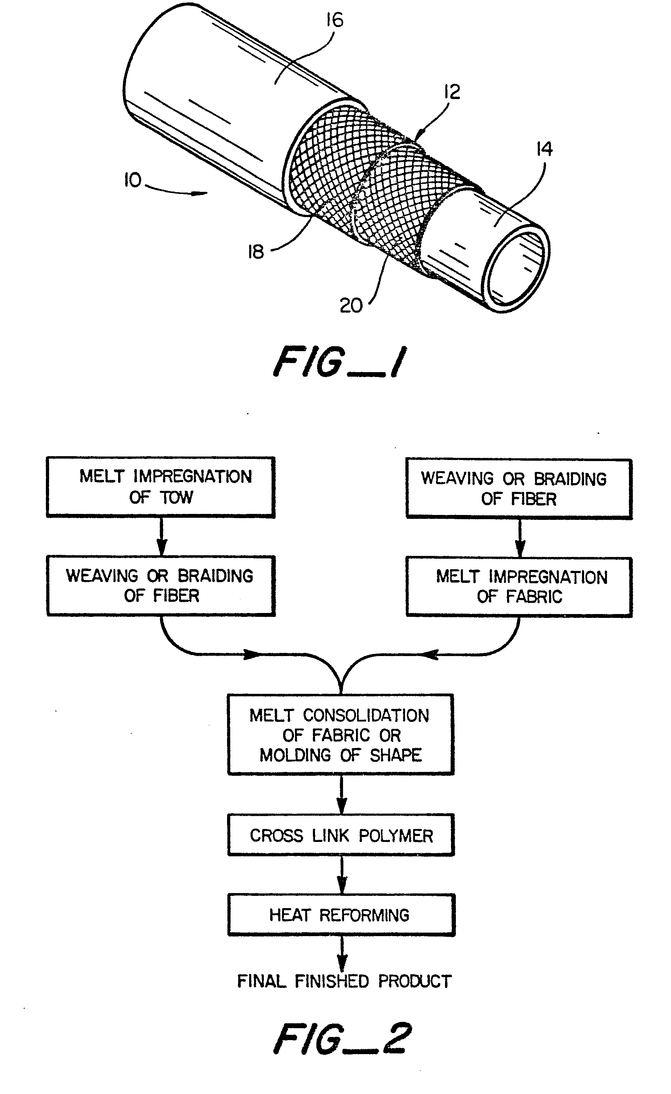

With continued reference to the drawing, Fig. 1 discloses "semi-finished" duct generally at 10 fabricated from the reformable composite 12 of the instant invention. Duct 10 includes a liner 14 inside the duct 10 which is not required but which is provided where the duct in this embodiment is used as a fluid pressure vessel for low to moderate pressure fluid systems. Duct 10 is also provided with an optional outer cover 16 for environmental protection.

Before describing the specific process used to produce the reformable composite shown in Fig. 1, it is useful to understand that the composite in general may be embodied as a substrate of reinforcing fiber, impregnated with thermoplastic or polymeric matrix material, wherein all of the parts of the substrate are bonded together and are largely free of voids.

The reformable nature of the composite is created by cross-linking modification of the polymeric matrix material. This is possible by a process wherein the fiber-reinforcing material is impregnated with the polymer, the melt-impregnated fiber is then woven (or braided) into an intermediate composite and then consolidated into an integrated structure (composite) by melt-processing using both pressure with a mold or die and heat wherein the integrated structure is then allowed to cool. The material is then irradiated with ionizing radiation to cause cross-linking in the polymeric matrix material, thereby precluding the polymer from returning to the melt. Secondary heating will cause significant softening of the polymer, enough to allow movement of the reinforcing fibers, i.e. reformability, but the matrix still gives enough integrity to maintain general "as molded" shape.

Duct 10 illustrates the reformable composite produced as noted above and more specifically illustrates a pressure vessel for low to moderate pressure fluid systems. Reformable composite 12 is typically made with two layers 18 and 20 of braid on a 48-carrier braider, reinforcement-braided at 54.7° from the longitudinal. Impregnated fiber tow is made in this instance utilizing essentially Kevlar 49 impregnated with a matrix material of Tefzel 210 using melt-extrusion techniques. Specifically, fiber was drawn through a cross-head extrusion die modified with special channels which forced the fibers to splay apart during coating, thus allowing full penetration with the polymer. The pre-impregnated tows were then braided into a tubular shape, maintaining uniform tension on the tows, at a braid angle of less than 55° from the longitudinal. In this instance, two layers 18 and 20 of the pre-impregnated braid were then inserted into a tubular female mold with an expansible liner 14 inserted inside the braid. The expansible lining was in this instance extruded Tefzel tube which had been previously cross-linked, and which becomes an integral part of the finished product. It is within the scope of the invention to exclude the liner and this may be accomplished by the use of an expandible and removable mandrel in the manufacturing process. It is also within the scope of the invention to reverse the rigid mold and dimensionally variable mold relationship by having a rigid mold in the form of a male inner mandrel and having a diametrically recoverable outer mold which recovers down on the impregnated braid.

Low to moderate pressure (5 to 10 psi) is applied to the inner liner 14 and heat is applied to an outside female mold (not shown) starting at one end and progressively heating toward the other. The polymer must be heated above its melt point, which in this instance was approximately 300° C. Care must be taken not to overheat the material and not to heat too large a region. It is within the scope of the invention to use Pyrex tubing as the female mold and satisfactory consolidation may be seen as a smooth, uniform surface against the inside of the glass. As the consolidation progresses the braid angle will increase to the neutral angle of 54.7°, at which point further diametrical expansion will not occur without mechanical force. This is the optimum diameter for the final product and thus the I.D. of the female mold.

After cooling, the consolidated duct is removed from the mold and the inner mandrel is removed if desired, and the duct is rotated under an electron beam to cross-link the polymer. The dose delivered is approximately 7 Mrads, uniform over the duct.

The duct 10, which is now a "semi-finished" duct, may be reformed as desired. Reforming may be accomplished by: (1) Plugging the ends of the duct and pressurizing to approximately 5 to 10 psi (low pressure); (2) locally heating the duct above the $T_g$ (300° C. for Tefzel) where the bend is desired and bending either freehand or over a form; (3) cooling the bent section while maintaining the desired shape; and (4) if desired, reforming the already-reformed section by repeating the above steps. Note that low internal pressure is merely used to avoid local buckling or kinking, but such low pressures, i.e. 5 to 10 psi, are considered light pressures as compared to the requirement for dies, molds and high pressures needed in the forming of SMC and long-fiber-reinforcing composites discussed earlier.

It is within the scope of the invention to produce and utilize impregnated fiber tow wherein the fiber reinforcement comprises about 10% to 65% (preferably less than about 45%) by volume of the consolidated composite. At substantially higher fiber contents, the woven tow, after consolidation and cross-linking, tends to tear open and fissure during the reforming operation, making the composition unsuitable for use in the present invention. At substantially lower fiber contents the woven tow, after consolidation and cross-linking, tends to be mechanically weak and unsuitable for use in the present invention as the cross-section of the article must be substantially increased to carry similar mechanical loads. The increased size and weight is undesirable in high-performance applications found, for instance, in the aerospace industry.

It is within the scope of the invention to have reinforcing fibers placed other than off axis. This will affect the manner in which the duct may be reformed. Reinforcing fiber, braid or fabric may also be incorporated. It is also within the scope of the invention to combine various reinforcing fibers as well as various textile configurations (braided, woven, knitted, etc.) as desired to produce the desired reinforced composite.

Reinforcing fibers may be other than Kevlar as for example glass, graphite, boron, metal, ceramic, and other organic fibers. Likewise, other matrix materials may be used other than Tefzel, for example, Ultem, polyethylene, Kynar, or other cross-linkable polymers. Polymers, copolymers, polymer blends and mixtures thereof are within the scope of the invention and are referred to generally as thermoplastic polymers which may be cross-linked in accordance with the invention. As mentioned earlier, fibers may be oriented by other than braiding, for example may be woven, knitted, filament-wound or hand-laid. Likewise, as in the case of the duct 10, multiple layers of the oriented fibers may be utilized to provide the structural reinforcement that is desired.

Various methods of consolidation of the composite are within the scope of the invention. For example, pultrusion or other in-line systems may be utilized. It is also possible to consolidate articles on a piece-by-piece basis using either high or low pressure and either matched or free molds.

Various methods of cross-linking matrix material are also within the scope of the invention, such as ionizing radiation, heat, or chemical reaction.

In the preferred embodiment of the instant invention, fiber coating must be done by melt-impregnation to ensure sufficient polymer coating and to allow incorporation of typical thermoplastic additives useful for cross-linking the article and providing desirable characteristics such as flame retardation, heat stability, etc.

Finally, it is understood that the final product shape is not confined to tubular cross-sections. Shapes may also include sheets, squares or rectangular cross-sections, T's, channels, rods, L's and I's, etc.

Figure 2 illustrates a process flow diagram of the methods of making the reformable composite of the instant invention. As disclosed earlier, one method is to provide fiber-reinforcing material and then melt-impregnate the fiber-reinforcing material such as a tow with a cross-linkable thermoplastic polymer. This step is followed by the interlacing such as by weaving or braiding or other fiber manipulation of the fiber-reinforcing material into an intermediate composite. Next comes the step of melt-consolidation of the intermediate composite such as a fabric or web, possibly including the molding of the shape of the final composite or article. Then follows the step of cross-linking the polymer that has been used to melt-impregnate. At this point a freely reformable reinforced composite cross-section has been created. What may follow for purposes of process is the heat-reforming of the article into a final finished product.

Alternatively, a web or fabric may be first created by interlacing orientation of the fibers such as by weaving or by braiding, followed by the step of melt-impregnating the finished fabric or web to form an intermediate composite. Then follows the melt-consolidation and the subsequent cross-linking steps discussed earlier.

Although specific embodiments of the invention have been set forth herein, it is not intended to limit the invention thereto, but to include all of the variations and modifications falling within the scope of the appended claims.

-12-

WHAT IS CLAIMED IS:

1. A reformable composite comprising fiber-reinforcing material melt-impregnated with a cross-linked thermoplastic polymer.

2. The composite of claim 1 wherein the fiber-reinforcing material comprises less than about sixty-five percent by volume of the composite.

3. The composite of claim 2 wherein the fiber-reinforcing material comprises more than about ten percent by volume of the composite.

4. The composite of claim 1 wherein the fiber-reinforcing material comprises less than about forty-five percent by volume of the composite.

5. The composite of claim 1 wherein the fiber-reinforcing material is essentially glass fiber.

6. The composite of claim 1 wherein the fiber-reinforcing material is essentially Kevlar fiber.

7. The composite of claim 1 wherein the fiber-reinforcing material is essentially carbon fiber.

8. The composite of claim 1 wherein the polymer is Tefzel.

9. The composite of claim 1 wherein the polymer is Ultem.

10. The composite of claim 1 wherein the polymer is Kynar.

11. The composite of claim 1 wherein the polymer is polyethylene.

12. The composite of claim 1 wherein the polymer is cross-linked by ionizing radiation.

13. A reformable composite comprising fiber-reinforcing material in the form of a tow, the tow having been melt-impregnated with a cross-linkable thermoplastic polymer, the impregnated tow having been interlaced to form an intermediate composite, the intermediate composite having been melt-consolidated and the polymer having been subsequently cross-linked.

14. The composite of claim 13 wherein the fiber-reinforcing material is essentially Kevlar fiber.

15. The composite of claim 13 wherein the polymer is Tefzel.

16. The composite of claim 13 wherein the interlacing is braiding.

17. The composite is claim 16 wherein the braiding is at a braid angle which is the neutral angle.

18. The composite of claim 17 wherein the composite is in the form of a duct and the duct further includes a liner inside the duct.

19. A reformable composite comprising fiber-reinforcing material in the form of a tow, the tow having been interlaced, the interlaced tow having been then melt-impregnated with a cross-linkable thermoplastic polymer to form an intermediate composite, the intermediate composite having been melt-consolidated and the polymer subsequently cross-linked.

20. A method of making a reformable composite comprising the steps of:

    providing a fiber-reinforcing material;

    melt-impregnating the fiber-reinforcing material with a cross-linkable thermoplastic polymer;

    melt-consolidating the impregnated fiber-reinforcing material; and

    cross-linking the polymer of the consolidated impregnated fiber-reinforced material.

21. The method of claim 20 wherein the fiber-reinforcing material is in the form of a tow and further including the step of interlacing the tow after it is melt-impregnated with polymer.

22. The method of claim 21 wherein the interlacing step comprises braiding of the tow.

23. The method of claim 22 wherein the braiding is done at a braid angle which is the neutral angle.

0185460

*FIG_1*

| MELT IMPREGNATION OF TOW | | WEAVING OR BRAIDING OF FIBER |
|---|---|---|
| ↓ | | ↓ |
| WEAVING OR BRAIDING OF FIBER | | MELT IMPREGNATION OF FABRIC |

MELT CONSOLIDATION OF FABRIC OR MOLDING OF SHAPE

CROSS LINK POLYMER

HEAT REFORMING

FINAL FINISHED PRODUCT

*FIG_2*